# EUROPÄISCHE PATENTANMELDUNG

(11) **EP 1 416 100 A1**
(43) Veröffentlichungstag der Anmeldung: **06.05.2004**
(21) Anmeldenummer: 03022061.0
(22) Anmeldetag: 02.10.2003
(51) Int. Cl.: E04C 2/34, E06B 3/48

(54) **Plattenelement**

(30) Priorität: 30.10.2002 DE 10250786
(71) Anmelder: Holz-Speckmann GmbH, 33790 Halle (DE)
(72) Erfinder: Brinkkötter, Dieter, 33790 Halle (DE)
(74) Vertreter: Specht, Peter, Dipl.-Phys.

(57) **Zusammenfassung**

Ein Plattenelement (1), insbesondere für Garagen- oder Sectionaltore, Bodenbeläge, oder Wände, ist aus einem extrudierbaren Material hergestellt, das nach der Extrusion spanend bearbeitbar ist. Das Plattenelement (1) ist zumindest in einem mittleren Bereich als Hohlprofil ausgebildet und weist mehrere hohle Innenkammern (4) auf. Erfindungsgemäß ist das Plattenelement (1) an gegenüberliegenden Längskanten in einem Randbereich (6, 9) als profilierbares Vollprofil ausgebildet. Das Plattenelement (1) lässt sich so kostengünstig herstellen, insbesondere wenn ein hoher Anteil an Naturstoffen in dem extrudierbaren Material vorgesehen ist. Durch die Ausbildung als Vollprofil im Randbereich kann das Plattenelement (1) in diesem Bereich profiliert werden, beispielsweise um eine Nut- und Federverbindung zur Verbindung mehrerer Plattenelemente (1) vorzusehen.

## Beschreibung

Die vorliegende Erfindung betrifft ein Plattenelement, insbesondere für Garagentore, aus einem extrudierbaren Material, das nach der Extrusion spanend bearbeitbar ist, wobei das Plattenelement zumindest in einem mittleren Bereich als Hohlprofil ausgebildet ist und mehrere hohle Innenkammem aufweist.

Es gibt bereits Plattenelemente, die als doppelwandige Bauelemente für ein Garagentor ausgebildet und aus mehreren Einzelteilen im wesentlichen quaderförmig aufgebaut sind, und an den Längskanten jeweils Dichtungen aufweisen, damit mehrere Plattenelemente zueinander verschwenkbar gelagert werden können und in einer parallel zueinander ausgerichteten Position eine geschlossene Einheit für ein solches Tor bilden. Zwar wird durch den doppelwandigen Aufbau eine gewisse Isolierung erreicht, allerdings sind solche Plattenelemente kompliziert aufgebaut und teuer in der Herstellung.

Der Erfindung liegt daher die Aufgabe zugrunde, ein Plattenelement, insbesondere für Sectional- oder Garagentore zu schaffen, das einfach aus einer geringen Anzahl an Bauteilen aufgebaut und kostengünstig herstellbar ist.

Diese Aufgabe wird mit einem Plattenelement mit den Merkmalen des Anspruches 1 gelöst.

Das Plattenelement besteht erfindungsgemäß aus einem extrudierbaren Material, wobei das Plattenelement in einem mittleren Bereich als Hohlprofil ausgebildet ist und an gegenüberliegenden Längskanten das Plattenelement in einem Randbereich als profilierbares Vollprofil ausgebildet ist. Durch die Ausbildung als Hohlprofil besitzt das Plattenelement zunächst eine gute Wärme- und Schallisolierung und kann integral aus einem Bauteil hergestellt werden. In einem Randbereich an den Längskanten ist das Plattenelement jedoch als Vollprofil ausgebildet, sodass es in diesem Bereich profiliert werden kann, beispielsweise um eine Nut- und Federverbindung vorzusehen, damit mehrere Plattenelemente für ein Rolltor, eine Wandverkleidung, einen Bodenbelag oder ähnliche Anwendungszwecke zusammengesetzt werden können. Statt einer Nut- und Federverbindung können auch andere Befestigungsmittel im Bereich des Vollprofiles montiert werden, beispielsweise können in diesem Bereich Schraubverbindungen vorgesehen sein. Der als Vollprofil ausgebildete Randbereich kann dabei entweder eine rechteckige Querschnittsform aufweisen, damit der Bereich bei Bedarf durch spanende Bearbeitung auf die gewünschte Kontur gebracht werden kann, oder er kann auch schon im Rahmen des Extrusionsverfahrens profiliert sein.

Gemäß einer bevorzugten Ausführungsform der Erfindung ist das Plattenelement aus einer Mischung aus Naturstoffen, wie Holzfasern, Holzspäne, Stroh, Heu, Reisschalen oder dergleichen und Polypropylen hergestellt. Diese Naturstoffe sind äußerst kostengünstig zu beschaffen und können in einer Mischung mit einem Polymer, vorzugsweise Polypropylen im Rahmen eines Extrusionsverfahrens verarbeitet werden. Die erhitzte Mischung wird durch einen Extruder gedrückt und kann gleich zu einem als Hohlprofil ausgebildeten Plattenelement verarbeitet werden. Durch Farbzusätze kann hier die gewünschte Farbe erreicht werden. Vorzugsweise liegt der Anteil an Polypropylen in einem Bereich zwischen 20 und 40 %, je nach den Festigkeitsanforderungen. Für eine stärkere Bindung kann die Mischung auch einen Anteil an Zement aufweisen.

Der als Vollprofil ausgebildete Randbereich des Plattenelementes ist vorzugsweise zwischen 1 bis 10 cm, insbesondere 3 bis 7 cm breit. In einer solchen Breite lassen sich auch etwas längere Profilierungen für eine Nut- und Federverbindung herstellen und der Randbereich besitzt eine ausreichende Festigkeit. Der übrige mittlere Bereich des Plattenelementes weist hohle Innenkammern auf, die im Querschnitt vorzugsweise im wesentlichen rechteckige Kanäle sind. Dadurch wird bei einem hohen Maß an Festigkeit des Plattenelementes nur relativ wenig Material benötigt und das Gewicht des Plattenelementes gering gehalten.

Die Wandstärke der Außenwände des Plattenelementes liegt möglichst in einem Bereich zwischen 0,2 und 3 cm, vorzugsweise 0,5 bis 1 cm, sodass die Außenwände noch mit Nuten oder Profilierungen versehen werden können. Gerade wenn das Plattenelement als Bestandteil eines Sectionaltores eingesetzt werden soll, sind solche Profilierungen oder Muster häufig gewünscht, damit das Sectionaltor ein ansprechendes äußeres Erscheinungsbild besitzt. Daher sollte die Wandstärke ein gewisses Maß an Profilierungen noch zulassen.

Das Plattenelement kann entweder als quaderförmiges Bauelement bereitgestellt werden, das nachträglich noch profiliert und beschichtet werden kann. Somit kann eine Masse von Plattenelementen kostengünstig hergestellt werden, die dann für unterschiedliche Produkte noch angepasst werden. Es ist alternativ auch möglich, das Plattenelement gleich mit profilierten Randbereichen vorzusehen und/oder das Plattenelement gleich nach der Extrusion auch mit einer Farbbeschichtung zu versehen.

Die Erfindung wird nachfolgend anhand zweier Ausführungsbeispiele mit Bezug auf die beigefügten Zeichnungen näher erläutert. Es zeigen:
- Figur 1: eine Querschnittsansicht durch ein Plattenelement gemäß einem Ausführungsbeispiel der vorliegenden Erfindung;
- Figur 2: eine schematische Ansicht von Plattenelementen der Figur 1 im eingebauten Zustand, und
- Figur 3: eine Querschnittsansicht durch ein Plattenelement gemäß einer zweiten Ausführungsform..

Ein Plattenelement 1 ist aus einem extrudierbaren Material aus einer Mischung aus Naturstoffen, insbesondere Holzfasern und Holzspänen mit Polypropylen hergestellt. Das Plattenelement ist im wesentlichen quaderförmig ausgebildet und weist eine erste Außenwand 2 und an der gegenüberliegenden Seite eine zweite Außenwand 3 auf. In einem mittleren Bereich des Plattenelementes 1, der über 60 % des Gesamtvolumens einnimmt, ist das Plattenelement 1 als Hohlprofil mit hohlen Innenkammern 4 ausgebildet. Zur Erhöhung der Festigkeit sind zwischen den Innenkammem Stege 5 vorgesehen, die die beiden Außenwände 2 und 3 miteinander verbinden.

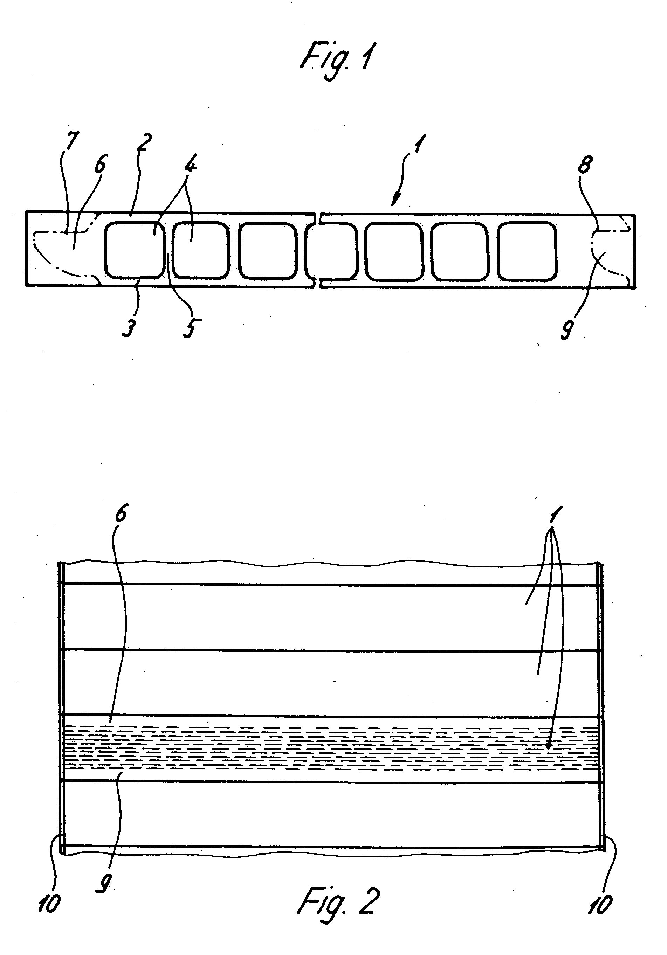

An gegenüberliegenden Längskanten des Plattenelementes 1 sind Randbereiche 6 und 9 vorgesehen die jeweils als Vollprofil ausgebildet sind. Diese Randbereiche 6 und 9 können daher für mechanische Befestigungsmittel oder zur Profilierung eingesetzt werden. In Figur 1 ist an dem Randbereich 6 ein gestrichelt dargestelltes Federprofil 7 und an dem Randbereich 9 ist ein gestrichelt dargestelltes Nutprofil 8 vorgesehen, die ineinander verschenkbar oder verschiebbar sind.

Das Federprofil 7 und das Nutprofil 8 können entweder gleich durch das Extrusionsverfahren hergestellt werden, oder das Plattenelement wird im wesentlichen quaderförmig hergestellt und die Profilierung im Randbereich wird durch spanende Bearbeitung erreicht, sodass mit einem standardisierten Plattenelement 1 eine Vielzahl von unterschiedlich ausgebildeten Plattenelementen hergestellt werden kann.

In Figur 2 ist ein mögliches Einsatzgebiet für das Plattenelement 1 als Garagenoder Sectionaltor gezeigt. Die Plattenelemente 1 sind an ihren Längskanten miteinander verbunden und im Randbereich mit Abdeckungen 10 versehen. Die Abdeckungen 10 verschließen die Innenkammern 4 der Plattenelemente 1. Die Abdeckungen 10 sind über nicht dargestellte Scharnierelemente gelenkig miteinander verbunden, sodass die Einheit aus mehreren Plattenelementen 1 entlang einer Kurvenbahn bewegt werden kann, wie dies für Garagen- oder Sectionaltore bekannt ist.

Zur Erhöhung der Wärme- und Schallisolierung ist es möglich in die Innenkammern 4 Dämmmaterial einzufügen.

Ferner ist es möglich, auch die Außenwände 2 und 3 mit einer Profilierung, beispielsweise einer Riffelung als Antirutschoberfläche, eine Nutung oder eine Motivfräsung zu versehen. Außerdem kann an den Außenwänden 2 und 3 eine Farbbeschichtung aufgebracht sein.

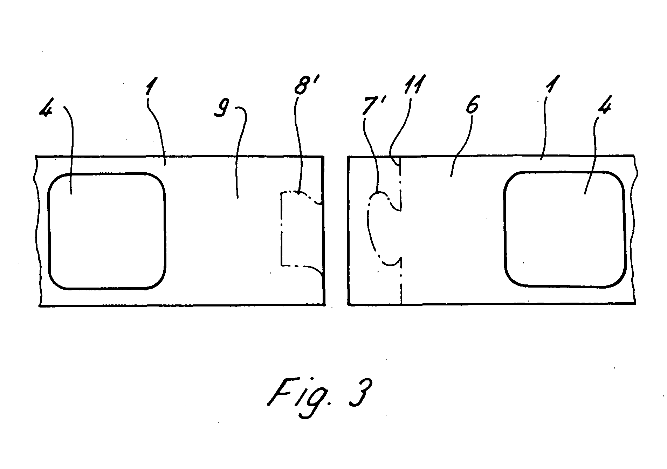

Das in Fig. 3 gezeigte Ausführungsbeispiel eines Plattenelementes 1 ist im wesentlichen wie in Fig. 1 aufgebaut, wobei das Plattenelement 1 als Bodenbelag oder Wandelement eingesetzt werden kann. An einer Längskante des Plattenelementes 1 ist eine Feder 7' vorgesehen, die pilzkopfartig von einer Stirnkante 11 hervorsteht. An einer gegenüberliegenden Längskante eines weiteren Plattenelementes 1 ist eine hinterschnittene Nut 8' mit einem nach unten gerichteten Vorsprung ausgebildet, in die die Feder 7' im wesentlichen formschlüssig eingreifen kann. Dadurch wird mechanisch eine Verriegelung der zwei Plattenelemente 1 erreicht, die wieder lösbar ist, beispielsweise um einen mobilen Bodenbelag herzustellen, wie dies auch in der Patentanmeldung DE 101 58 730 beschrieben ist. Die Nut 8' und die Feder 7' sind hier integral mit dem Plattenelement 1 ausgebildet, wobei es natürlich möglich ist, eine Nut 8' und eine Feder 7' durch Metallprofile vorzusehen, die in das Material einextrudiert sind.

Statt einer rein mechanischen Verriegelung ist es natürlich möglich, die Plattenelemente 1 mit anderen Formen von Nuten und Federn zu profilieren, die dann auch miteinander verleimt werden können. Statt Nuten und Federn können auch Wechselfalzverbindungen hergestellt werden, wobei dann die Randbereichen benachbarter Längskanten einander überlappen.

## Patentansprüche

1. Plattenelement (1), insbesondere für Garagen- oder Sectionaltore, Bodenbeläge oder Wände, aus einem extrudierbaren Material, dass nach der Extrusion spanend bearbeitbar ist, wobei das Plattenelement (1) zumindest in einem mittleren Bereich als Hohlprofil ausgebildet ist und mehrere hohle Innenkammern (4) aufweist, **dadurch gekennzeichnet, dass** an gegenüberliegenden Längskanten das Plattenelement (1) jeweils in einem Randbereich (6, 9) als profilierbares Vollprofil ausgebildet ist.

2. Plattenelement nach Anspruch 1, **dadurch gekennzeichnet, dass** das Plattenelement (1) aus einer Mischung aus Naturstoffen, wie Holzfasern, Holzspäne, Stroh, Heu, Reisschalen oder dergleichen, und Polypropylen hergestellt ist.

3. Plattenelement nach Anspruch 2, **dadurch gekennzeichnet, dass** der Anteil an Polypropylen in einem Bereich zwischen 20 und 40 % liegt.

4. Plattenelement nach Anspruch 2 oder 3, **dadurch gekennzeichnet, dass** die Mischung einen Anteil an Zement aufweist.

5. Plattenelement nach einem der Ansprüche 1 bis 4, **dadurch gekennzeichnet, dass** der als Vollprofil ausgebildete Randbereich (6, 9) des Plattenelementes (1) zwischen 1 und 10 cm, vorzugsweise zwischen 3 und 7 cm breit ist.

6. Plattenelement nach einem der Ansprüche 1 bis 5, **dadurch gekennzeichnet, dass** die hohlen Innenkammern (4) als im Querschnitt im wesentlichen rechteckige Kanäle ausgebildet sind.

7. Plattenelement nach einem der Ansprüche 1 bis 6, **dadurch gekennzeichnet, dass** die Randstärke der Außenwände (2, 3) des Plattenelementes (1) in einem Bereich zwischen 0,2 und 3 cm, vorzugsweise 0,5 bis 1 cm liegt.

8. Plattenelement nach einem der Ansprüche 1 bis 7, **dadurch gekennzeichnet, dass** an einer ersten Längskante (9) ein Nutprofil (8) und an einer gegenüberliegenden zweiten Längskante (6) ein Federprofil (7) ausgebildet ist.

9. Plattenelement nach einem der Ansprüche 1 bis 8, **dadurch gekennzeichnet, dass** das Plattenelement (1) an der Außenseite mit einer Farbbeschichtung versehen ist.

10. Plattenelement nach einem der Ansprüche 1 bis 9, **dadurch gekennzeichnet, dass** die Innenkammern (4) mit einem Isoliermaterial gefüllt sind.
